# EUROPÄISCHE PATENTANMELDUNG

(11) **EP 3 322 047 A1**
(43) Veröffentlichungstag der Anmeldung: **16.05.2018**
(21) Anmeldenummer: 16198783.9
(22) Anmeldetag: 15.11.2016
(51) Int. Cl.: H01R 39/08, H02K 9/28, H02K 13/00

(54) **SCHLEIFRINGEINHEIT MIT LÜFTER-ISOLIERSEGMENT**

(71) Anmelder: Siemens Aktiengesellschaft, 80333 München (DE)
(72) Erfinder: Binder, Herbert, 94127 Neuburg (DE); Memminger, Oliver, 94127 Neuburg a. Inn (DE); Raskopf, Andrej, 94036 Passau (DE); Schifferer, Klaus, 94127 Neuburg am Inn (DE)

(57) **Zusammenfassung**

Die Erfindung betrifft eine Schleifringeinheit 1 für eine elektrische Maschine, wobei der Schleifringeinheit 1 zur Aufnahme eines Kohlebürstensystems vorgesehen ist und wobei der Schleifringeinheit 1 mindestens ein Isoliersegment 2,3,10 aufweist. Für eine effektive Kühlung der elektrischen Maschine wird vorgeschlagen, dass mindestens ein Isoliersegment 2,3 Ausprägungen zur Kühlung von Teilen der elektrischen Maschine aufweist.

## Beschreibung

Die Erfindung betrifft eine Schleifringeinheit für eine elektrische Maschine, wobei die Schleifringeinheit zur Aufnahme eines Kohlebürstensystems vorgesehen ist und wobei die Schleifringeinheit mindestens ein Isoliersegment aufweist.

Die Erfindung betrifft weiter eine elektrische Maschine mit einer derartigen Schleifringeinheit.

Eine derartige Schleifringeinheit für eine elektrische Maschine kommt beispielsweise bei Windkraftanlagen zum Einsatz. Hier besteht der Bedarf, dass die elektrischen Maschinen in Form der Generatoren und ihrer Komponenten immer kompakter werden. Dies führt dazu, dass bei gleichbleibender Baugröße die Schleifringkomponenten immer höher belastet werden, da die Temperaturen, insbesondere von Schleifringen, Schleifringbürsten und Kohlebürstenhalter häufig stark ansteigen. Somit besteht ein Bedarf, sämtliche Komponenten der elektrischen Maschine, insbesondere auch die Schleifringeinheit möglichst effizient zu kühlen.

Der Erfindung liegt die Aufgabe zu Grunde, eine Schleifringeinheit der eingangs genannten Art anzugeben, die auf einfache und kostengünstige Weise eine gleichmäßige Temperaturverteilung der Schleifringeinheit und somit eine möglichst effektive Kühlung der elektrischen Maschine ermöglicht.

Diese Aufgabe wird bei einer Schleifringeinheit der eingangs genannten Art dadurch gelöst, dass mindestens ein Isoliersegment Ausprägungen zur Kühlung von Teilen der elektrischen Maschine aufweist.

Der Erfindung liegt die Erkenntnis zugrunde, dass sich die Schleifringoberfläche bei größeren Leistungen aus Kostengründen nicht vergrößern lässt, was dazu führt, dass sich der Schleifringkörper stärker erwärmt. Hierdurch würde ohne weitere Maßnahmen die Temperatur der einzelnen Komponenten einer Schleifringeinheit auf einen kritischen Wert ansteigen, und es könnten Schäden am Schleifring sowie an den Schleifringbürsten entstehen.

Die Erfindung löst auf überraschend einfache Weise dieses Temperaturproblem dadurch, dass mindestens ein Isoliersegment der Schleifringeinheit Ausprägungen zur Kühlung von Teilen der elektrischen Maschine aufweist. Somit wird mindestens ein ohnehin vorhandenes Isoliersegment zwischen den einzelnen Schleifringen der elektrischen Maschine derart gestaltet, dass es als Lüfter wirkt. Hierdurch können die Temperaturen der Schleifringeinheit sowie der gesamten elektrischen Maschine deutlich reduziert werden. Dies führt dazu, dass kleinere Baugrößen der Schleifringeinheit möglich werden und bei gleicher Baugröße somit auch höhere Leistungsstufen. Die Ausprägungen des Isoliersegments bzw. gegebenenfalls mehrere Isoliersegmente bilden idealerweise dabei einen Lüfter, der zur Verteilung eines Kühlluftstroms zu den zu kühlenden Teilen der elektrischen Maschine vorgesehen ist. Es ist sogar möglich, dass mit Hilfe derartig gestalteter Schleifringeinheiten auch Nachrüstungen von bereits bestehenden elektrischen Maschinen ermöglicht werden, die dann sogar idealerweise eine höhere Lebensdauer bzw. eine höhere Belastbarkeit gegenüber normalen Schleifringeinheiten aufweisen.

Vorteilhafte Ausgestaltungsformen sind in den Unteransprüchen enthalten.

Eine gezielte Kühlung der Schleifringeinheit sowie einer in der Schleifringeinheit angeordneten Kohlebürsteneinheit wird auf einfach Weise dadurch erzielt, dass das die Ausprägungen aufweisende Isoliersegment einen Lüfter bildet, der zur Verteilung eines Kühlluftstroms zu den zu kühlenden Teilen der elektrischen Maschine vorgesehen ist.

Konstruktiv gelingt dies aufwandsarm dadurch, dass das die Ausprägungen aufweisende Isoliersegment als Lüfterrad aus dem Isoliersegment ausgeprägt ist.

Eine nochmals spezifischere und gezieltere Kühlluftverteilung auch hin zu Komponenten einer Kohlebürsteneinheit wird dadurch sichergestellt, dass die Schleifringeinheit Bohrungen zur Durchführung von Kühlluft aufweist.

Dabei sind die Bohrungen vorteilhafter Weise zur gezielten Durchleitung von Kühlluft zu mit einer mit der Schleifringeinheit zusammenwirkenden Kohlebürsteneinheit vorgesehen.

Ein weiterer Effekt besteht darin, dass die Bohrungen zur Vergrößerung der Kühlfläche der Schleifringeinheit vorgesehen sind.

Eine zuverlässige konstruktive Ausgestaltung, die eine gute Mischung aus Aufwand und Nutzen beinhaltet, ist dadurch gebildet, dass die Schleifringeinheit als doppelflutig gekühlte Schleifringeinheit ausgebildet ist, bei der zumindest die außen liegenden Isoliersegmente als Lüfter ausgeprägt sind.

Im Folgenden wird die Erfindung anhand der in den Figuren dargestellten Ausführungsbeispiele näher beschrieben und erläutert.

Es zeigen:
- FIG 1: ein Ausführungsbeispiel einer doppelflutig gekühlten Schleifringeinheit mit jeweils außen liegenden Lüfter-Isoliersegmenten und
- FIG 2: eine Seitenansicht der in FIG 1 gezeigten Schleifringeinheit.

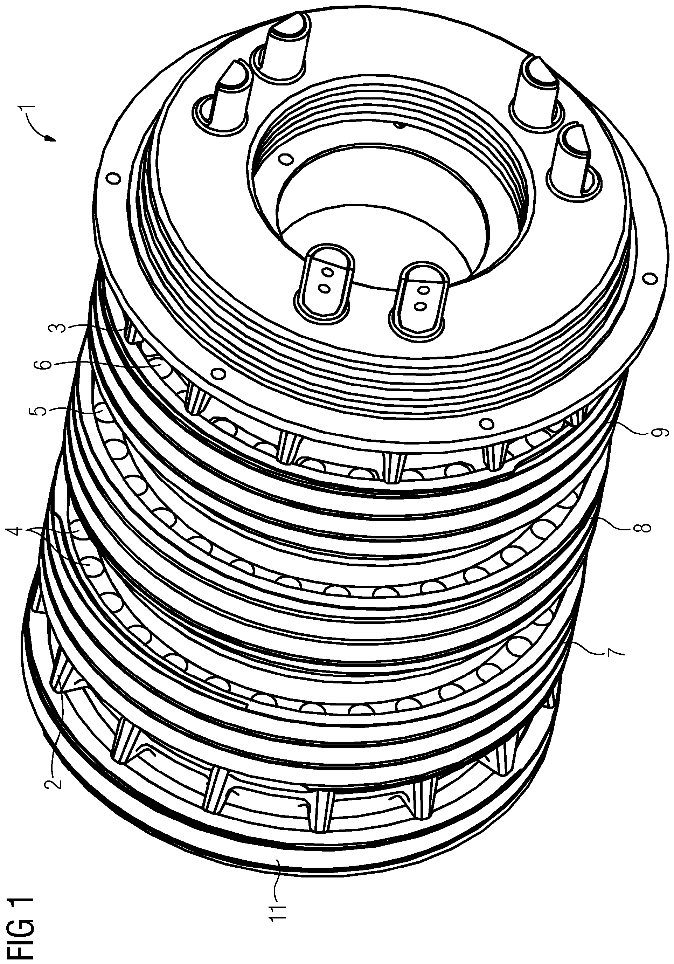

FIG 1 zeigt ein Ausführungsbeispiel einer doppelflutig gekühlten Schleifringeinheit 1 mit jeweils außenliegenden Lüfter-Isoliersegmenten 2,3. Der in FIG 1 dargestellt Schleifringkörper 1 besteht im Wesentlichen aus den Schleifringen 7,8,9, also aus einen dreiphasigen Schleifringsystem sowie einem Erdungsring 11. Zwischen den Schleifringen 7,8,9 sind Isoliersegmente 2,3 angeordnet. Die jeweils außenliegenden Isoliersegmente 2,3,10 des Schleifringkörpers 1 weisen Ausprägungen zur Kühlung von Teilen der elektrischen Maschine auf. Somit bilden die Isoliersegmente 2,3 jeweils eine Art Lüftereinheit, die zur Verteilung eines Kühlluftstromes zu den zu kühlenden Teilen der elektrischen Maschine vorgesehen sind. Hierdurch kann Frischluft aus der Umgebung gezielt zu einzelnen Komponenten der elektrischen Maschine gelenkt werden. Hierzu weist die Schleifringeinheit seitlich an den Trägern der Schleifringe 7,8,9 Schleifringbohrungen 4,5,6 auf. Diese Schleifringbohrungen 4,5,6 dienen der Durchführung, beispielsweise von Kühlluft zu einer mit der Schleifringeinheit zusammenwirkenden Kohlebürsteneinheit. Diese ist in FIG 1 aus Gründen der Übersichtlichkeit nicht näher dargestellt.

Der in FIG 1 dargestellte Schleifringkörper, der aus der Schleifringeinheit 1 gebildet wird, bildet somit eine doppelflutig gekühlte Schleifringeinheit 1, die in der Lage ist, durch Ausnutzung der Umgebungsluft des ohnehin vorhandenen Kühlkreislaufs der Schleifringeinheit 1 die direkt beanspruchten Komponenten wie Schleifringbürsten, Bürstenhalter und den Schleifringkörper selbst zu kühlen. Hierdurch werden die Temperaturen der elektrischen Maschine deutlich reduziert. Die dadurch niedrigere Temperatur erlaubt kleinere Baugrößen der Schleifringkörper bzw. der Schleifringeinheit 1. Die Schleifringeinheit 1 kann hierdurch mit mehr Bürstenpro Phase belastet werden, was ohne eine derartige Kühlung nicht möglich wäre. Somit sind höhere Leistungsstufen als bisher realisierbar. Zudem ist bei dieser Art von Kühlung eine Fremdbelüftung zur Erzeugung von Volumenstrom nicht weiter notwendig, denn der Volumenstrom wird durch den ohnehin vorhandenen Lüfter der Schleifringeinheit 1 und mit dem erfindungsgemäßen Schleifringkörper, der als doppelflutiges Kühlsystem durch die beiden im Schleifring integrierten Lüfter mit den entsprechend ausgeprägten Isoliersegmenten 2,3 gebildet wird, miterzeugt.

Zusätzliche Kosten entstehen bei einer derartigen Ausführung der Schleifringeinheit 1 nicht, da die Isoliersegmente 2,3 ohnehin systembedingt vorgesehen sind. Eine derartige Schleifringeinheit 1 kann auch bei der Nachrüstung von elektrischen Maschinen, beispielsweise insbesondere auch bei Windkraftanlagen erfolgen, da die Schleifringeinheit 1 entsprechend kompatibel zu bestehenden elektrischen Maschinen und Generatoren gestaltet werden kann. Dies führt zu einer Vermeidung von zusätzlichen Kosten auch für Lagerhaltung, Einkauf, etc..

Das Besondere der in FIG 1 dargestellten Schleifringeinheit 1 besteht insbesondere darin, dass die kühle Umgebungsluft präzise an die benötigten Stellen, also direkt an und durch den Schleifring geführt werden kann. Dies geschieht einerseits durch eine direkte Luftführung zu der Lauffläche, an der die Wärme entsteht. Durch eine entsprechende Gestaltung der Isoliersegmente 2,3 des Schleifringkörpers 1 entsteht somit ein doppelflutig belüfteter Schleifringkörper, der eine deutlich erhöhte Kühlfläche aufweist, wobei genau diese Fläche mit Kühlluft versorgt wird. Die Kühlluft wird mit den entsprechenden Isoliersegmenten 2,3, die als Lüfter ausgeprägt sind, durch den sich drehenden Schleifringkörper 1 aus den ohnehin vorhandenen Kühlluftstrom entnommen und direkt an die gefährdeten Bereiche gefördert. Die Luftführung kann dabei durch ein bestimmtes Luftleitsystem noch weiter unterstützt werden. Das Kühlsystem kann dabei noch unterstützt werden durch einen in der Schleifringeinheit 1 in der Regel standardmäßig vorgesehenen Radiallüfter, der in FIG 1 nicht näher dargestellt ist. Somit wird die erwärmte Kühlluft von dem Schleifringlüfter angesaugt und über den Luftstrom durch das Lüftergehäuse aus dem Schleifringraum in die Umgebung abgeführt. Hierdurch werden also direkt die Laufflächen der Schleifringeinheit gekühlt.

Die Schleifringlaufflächen und die Bürstentemperaturen bleiben durch diese Maßnahmen somit in einen betriebsgerechten Temperaturbereich und der Betrieb ist gegen Überhitzung geschützt. Damit können insgesamt wesentlich kleinere, günstigere Bauteile verwendet werden, und somit ein problemloser Betrieb der elektrischen Maschine sichergestellt. Neben einer Anwendung bei Generatoren, beispielsweise für Windkraftanlagen, kann die Erfindung auch bei Motoren zum Einsatz kommen.

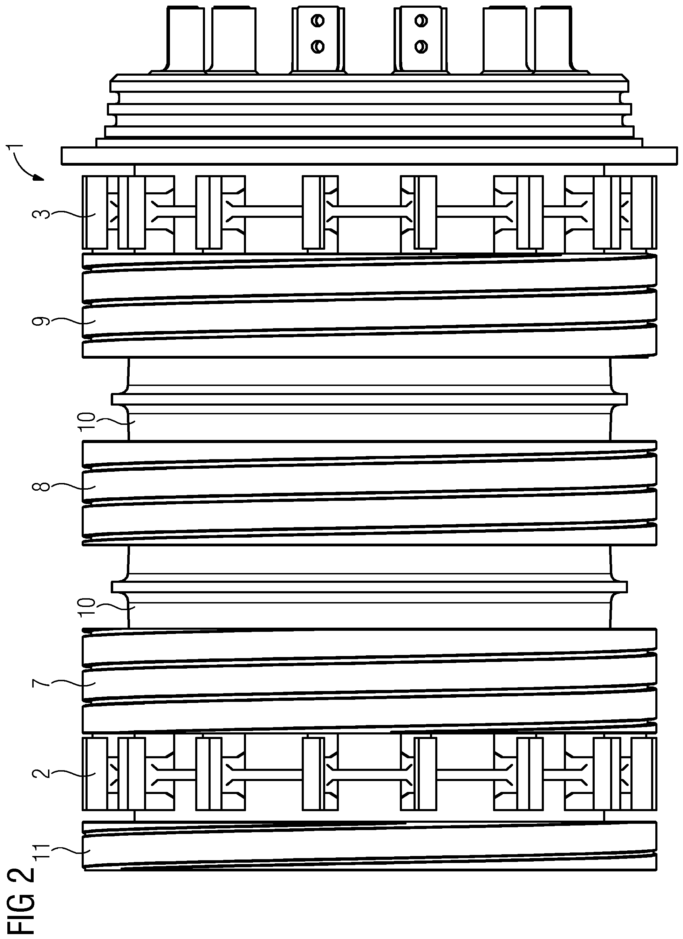

FIG 2 zeigt eine Seitenansicht der in FIG 1 gezeigten Schleifringeinheit 1. Zur Vermeidung von Wiederholungen wird bezüglich der Funktion sowie der Bezugszeichen auf die Ausführungen zu FIG 1 verwiesen.

Zusammenfassend betrifft die Erfindung somit eine Schleifringeinheit 1 für eine elektrische Maschine, wobei der Schleifringeinheit 1 zur Aufnahme eines Kohlebürstensystems vorgesehen ist und wobei der Schleifringeinheit 1 mindestens ein Isoliersegment 2,3,10 aufweist. Für eine effektive Kühlung der elektrischen Maschine wird vorgeschlagen, dass mindestens ein Isoliersegment 2,3 Ausprägungen zur Kühlung von Teilen der elektrischen Maschine aufweist.

## Patentansprüche

1. Schleifringeinheit (1) für eine elektrische Maschine, wobei der Schleifringeinheit (1) zur Aufnahme eines Kohlebürstensystems vorgesehen ist und wobei der Schleifringeinheit (1) mindestens ein Isoliersegment (2,3,10) aufweist,
**dadurch gekennzeichnet,**
**dass** mindestens ein Isoliersegment (2,3) Ausprägungen zur Kühlung von Teilen der elektrischen Maschine aufweist.

2. Schleifringeinheit (1) nach Anspruch 1,
wobei das die Ausprägungen aufweisende Isoliersegment (2,3) einen Lüfter bildet, der zur Verteilung eines Kühlluftstroms zu den zu kühlenden Teilen der elektrischen Maschine vorgesehen ist.

3. Schleifringeinheit (1) nach einem der Ansprüche 1 oder 2, wobei das die Ausprägungen aufweisende Isoliersegment (2,3) als Lüfterrad aus dem Isoliersegment (2,3) ausgeprägt ist.

4. Schleifringeinheit (1) nach einem der Ansprüche 1 bis 3, wobei die Schleifringeinheit (1) Bohrungen (4,5,6) zur Durchführung von Kühlluft aufweist.

5. Schleifringeinheit (1) nach einem der Ansprüche 1 bis 4, wobei die Bohrungen (4,5,6) zur gezielten Durchleitung von Kühlluft zu mit einer mit der Schleifringeinheit (1) zusammenwirkenden Kohlebürsteneinheit vorgesehen sind.

6. Schleifringeinheit (1) nach einem der Ansprüche 1 bis 5, wobei die Bohrungen (4,5,6) zur Vergrößerung der Kühlfläche der Schleifringeinheit (1) vorgesehen sind.

7. Schleifringeinheit (1) nach einem der Ansprüche 1 bis 6, wobei die Schleifringeinheit (1) als doppelflutig gekühlte Schleifringeinheit (1) ausgebildet ist, bei der zumindest die außen liegenden Isoliersegmente (2,3) als Lüfter ausgeprägt sind.

8. Elektrische Maschine mit einer Schleifringeinheit (1) nach einem der Ansprüche 1 bis 7.
